# EUROPEAN PATENT SPECIFICATION

(11) **EP 1 596 164 B1**
(45) Date of publication and mention of the grant of the patent: **28.11.2007**
(21) Application number: 04405297.5
(22) Date of filing: 10.05.2004
(51) Int. Cl.: G01D 4/00, G06M 1/272

(54) **Automatic meter-reading device**
Automatische Zählerablesevorrichtung
System de relevé automatique de compteur.

(43) Date of publication of application: 16.11.2005
(73) Proprietor: CSEM Centre Suisse d'Electronique et de Microtechnique SA, 2007 Neuchâtel (CH)
(72) Inventor: Bitterli, Stephan, 6055 Alpnach Dorf (CH); Klehr, Hannes, 22763 Hamburg (DE); Gubler, Ulrich, 6006 Luzern (CH)
(74) Representative: Schneider Feldmann AG Patent- und Markenanwälte

(56) References cited:
- WO-A-90/05426
- GB-A- 2 278 471
- US-A- 4 331 402
- US-A- 4 680 704

## Description

### FIELD OF THE INVENTION

This invention relates to automatic meter reading, and especially to devices and methods for representing the result of count of a counting mechanism in the form of electric signals, using optoelectronic means. In particular, it relates to a device and a method for automatically monitoring a metering device. This invention is suited in a "retrofit" or "add-on" manner for all counting mechanisms such as electric-power meters, water meters or gas meters in industry or residential buildings.

### BACKGROUND OF THE INVENTION

Reading the values from metering devices is of importance in various fields such as consumption of electric power, water, or gas in a facility, house, or apartment. Currently, the most frequent method to read the meters is to install a counting mechanism at the point of consumption and have a person taking the numbers from the meter roller from time to time.

As this standard solution of visual meter reading is time consuming and expensive, several solutions for an automatic meter reading (AMR) have been proposed. Generally, they consist of a sensor part measuring the current status of the meter, an analysis part converting the physical measurement into transferable data, and a transmission part providing the data to the utility company by wire or wireless. The optical detection of the meter roller by a camera sensor is especially attractive among other solutions as it relies on the same kind of measurement as a human observer looking at the meter roller.

An automatic meter reading system can be built from scratch with the necessary features included in the housing volume. A layout which allows an automatic and a visual meter reading simultaneously is described in U.S. Patent No. 4,680,704 (Case et al.). However, as large numbers of counting mechanisms are already installed at the consumption points and the utility companies do not want to exchange all of them, a solution for old, legacy meters is necessary. Such a device should be "plugable" to the original counting mechanism without any modification of the counting mechanism itself.

"Retrofit" or "add-on" meter readers are known that can be either attached directly to the front window of the counting mechanism, consequently obscuring the meter roller for a human observer, or use a semi-transparent mirror reflecting a part of the light to the detector and transmitting another part to a human observer or vice versa. Both approaches are described in patent literature, e.g., in GB-2'278471 WO-02/101334, EP-0'841'635, DE-100'32'755 or US-2002/0,039,068.

In principle, an automatic meter reader can work passively without any active illumination, relying just on the background light of the environment. However, counting mechanisms can be in various places as, e.g., in a dark basement illuminated merely by a light bulb, or also on the outside of a building. Therefore, an active and well-controlled illumination is necessary in practice. Possible solutions for such illuminations are known. Their light source are most practically light-emitting diodes (LEDs), but also laser diodes or thermal emitters could be employed.

One of the major problems when using a semi-transparent mirror for concurrent visibility of the meter roller for a human observer is the light from outside that reaches the detector and sometimes disables a proper automatic reading. The environmental light can change considerably if, e.g., a light bulb is switched on in a dark basement or the sun light moves during the day. A lid covering the observer window is a possible solution, with the disadvantage that an automatic reading is not possible when a person is looking at the meter or if, accidentally or intentionally, the lid does not close completely.

U.S. Patent N°. 4,680,704 propose the use of wavelength filters for solving this problem. From WO-90/05426, the use of a dichroic, semi-transparent mirror for separating two light paths is known, and from U.S. Patent N° 4,331,402, the use of a movable mirror for choosing between two lights paths is known.

Another problem with automatic meter-reading devices is the specular back-reflection of light from the meter-housing window. This specular back-reflections from the plastic or glass surface is stronger than the diffuse back-scattering from the meter roller. Therefore, the bright reflexes can disable a proper reading of the numbers on the meter roller. Solving this problem by moving the light sources to larger angles, as proposed in WO-00/68643, is frequently not possible, because of the limited size of the meter reader. Furthermore, such a large angle illumination needs to be separately optimized for each type of meters as the distance from the front window to the roller can vary significantly. An illumination design not depending on the exact meter type is highly desirable.

### SUMMARY OF THE INVENTION

It is an object of the invention to provide an automatic meter-reading device that reduces the disadvantages of the prior art as described above. In particular, the disturbances of the automatic reading by background light of environment and/or the specular reflection of illumination on the meter-reader cover shall be suppressed or avoided. The illumination design shall not depend on the exact meter type.

These and other objects are solved by the device and the method as defined in the independent claims. Advantageous embodiments are defined in the dependent claims.

The inventive device for automatically monitoring a metering device comprises an image detector for detecting an image of said metering device, shielding means for shielding said image detector from at least part of light of environment, and/or anti-reflection means for preventing a direct reflection of illuminating light reaching said image detector.

In the inventive method for automatically monitoring a metering device, said metering device is imaged onto an image detector and detected by said image detector, said image detector is shielded from at least part of light of environment, and/or a direct reflection of illuminating light is prevented from reaching said image detector.

A first improvement according to the present invention relates to the disturbance from background light. It protects the meter-reading device against external, undesired light sources, increases the illumination efficiency reflected by the semi-transparent mirror, and gives a brighter image to the human observer looking through the semitransparent mirror at the meter roller. This is achieved by using a different wavelength band of light for the detection system than for the human observer and using, consequently, wavelength-selective optical elements in the imaging path. Most practically, the automatic detection and illumination system operates in the near-infrared part of the spectrum, leaving the whole visible spectrum to the human observer.

Thus, a first embodiment of the device according to the invention further comprises a housing, a first window and a second window in said housing, a first light path within said housing for automatically monitoring said metering device, said first light path connecting said first window with said image detector, a second light path within said housing for visually monitoring said metering device, said second light path connecting said first window with said second window, and a light source for illuminating said metering device via said first window, said light source emitting light with a certain spectral characteristic. Said shielding means comprise optical wavelength-selective means, arranged in said first and/or second light path, which wavelength-selective means allow a first part of the electromagnetic spectrum which comprises at least one wavelength emitted by said light source to reach said image detector, and prevent a second, different part of the electromagnetic spectrum from reaching said image detector.

In a first embodiment of the method according to the invention, said metering device is actively illuminated by light with a certain spectral characteristic, a first light path is provided for automatically monitoring said metering device with said image detector,and a second light path is provided for visually monitoring said metering device. A first part of the electromagnetic spectrum which comprises at least one wavelength comprised in said illuminating light is allowed to reach said image detector, and a second, different part of the electromagnetic spectrum is prevented from reaching said image detector.

An alternative approach to obtain a similar improvement as with the two wavelength bands, is to use a fold-away mirror instead of the semi-transparent mirror. The fold-away mirror can be moved between two positions, with or without latching. The mirror can be turned either by the human observer or by an automatic actuation system. An example of a meter reader with manual actuation is an application where the default imaging path is directed to the image detector and a human observer has to turn and hold the mirror to see the meter roller. An example of a meter reader with an automatic actuation system is an application where the default imaging path is directed to the human observer and the meter reader flips the mirror temporarily to read the meter by the detection system.

Thus, a second embodiment of the device according to the invention further comprises a housing, a first window and a second window in said housing, a first light path within said housing for automatically monitoring said metering device, said first light path connecting said first window with said image detector, a second light path within said housing for visually monitoring said metering device, said second light path connecting said first window with said second window, and a light source for illuminating said metering device via said first window, said light source emitting light with a certain spectral characteristic. Said shielding means comprise a mirror movable between a first and a second position, which mirror in said first position releases said first light path and disables or blocks said second light path, and which mirror in said second position releases said second light path and disables or blocks said first light path.

In a second embodiment of the method according to the invention, said metering device is actively illuminated by light with a certain spectral characteristic, a first light path is provided for automatically monitoring said metering device with said image detector,and a second light path is provided for visually monitoring said metering device. Said first light path is released while said second light path is disabled or blocked, and said second light path is released while said first light path is disabled or blocked.

A further improvement according to the invention concerns the undesired specular back-reflections on the meter window. It is based on a consecutive illumination and read-out of different areas of the meter.

Thus, a third embodiment of the device according to the invention further comprises at least two light sources for illuminating said metering device, said light sources being locally separated from each other, wherein said anti-reflection means comprise means for separately switching on and off each of said light sources.

In a third embodiment of the method according to the invention, said metering device is consecutively illuminated from at least two different directions, during each of said at least two illuminations, said metering device is imaged on an image detector and detected by said image detector, and at least two resulting image signals are used for obtaining an image of said metering device not disturbed by direct reflection of illuminating light.

An alternative improvement according to the invention for reducing the undesired specular back-reflections uses two crossed polarizers. The illumination is polarized with a first polarizer, and a second polarizer (an analyzer) with perpendicular polarization direction is used to discriminate between the specular back-reflection on the window and the diffuse back-scattering on the meter roller. The reflected light on the meter window maintains its polarization state and is blocked by the "cross-polarized" analyzer in front of the detection system. On the other hand, the diffusively back-scattered light from the meter roller is partly depolarized and can pass the analyzer to a certain extent. The image on the detector is therefore undisturbed by any specular reflection.

Thus, a fourth embodiment of the device according to the invention further comprises a light source for illuminating said metering device, wherein said anti-reflection means comprise polarizing means for linearly polarizing light emitted by said light source in a first polarization direction and analyzing means for linearly polarizing light impinging onto said image detector in a second polarization direction which is essentially perpendicular to said first polarization direction.

In a fourth embodiment of the method according to the invention, said metering device is illuminated by light linearly polarized in a first polarization direction, and only light linearly polarized in a second polarization direction which is essentially perpendicular to said first polarization direction is allowed to impinge onto said image detector.

### BRIEF DESCRIPTION OF THE DRAWINGS

Embodiments of the invention are described in greater detail hereinafter relative to the attached schematic drawings.
- Figure 1: shows a first embodiment of the device according to the invention in a side view.
- Figures 2 and 3: show the transmission and reflection, vs. the light wavelength, of (partly) dichroic mirrors for use in the device according to the invention.
- Figures 4 and 5: show a second embodiment of the device according to the invention in two different states, in a side view.
- Figures 6-8: show (a) top views and (b) images taken by the image detector in a third embodiment of the device according to the invention in three different states,
- Figure 9: shows a fourth embodiment of the device according to the invention in a top view.

### DESCRIPTION OF PREFERRED EMBODIMENTS

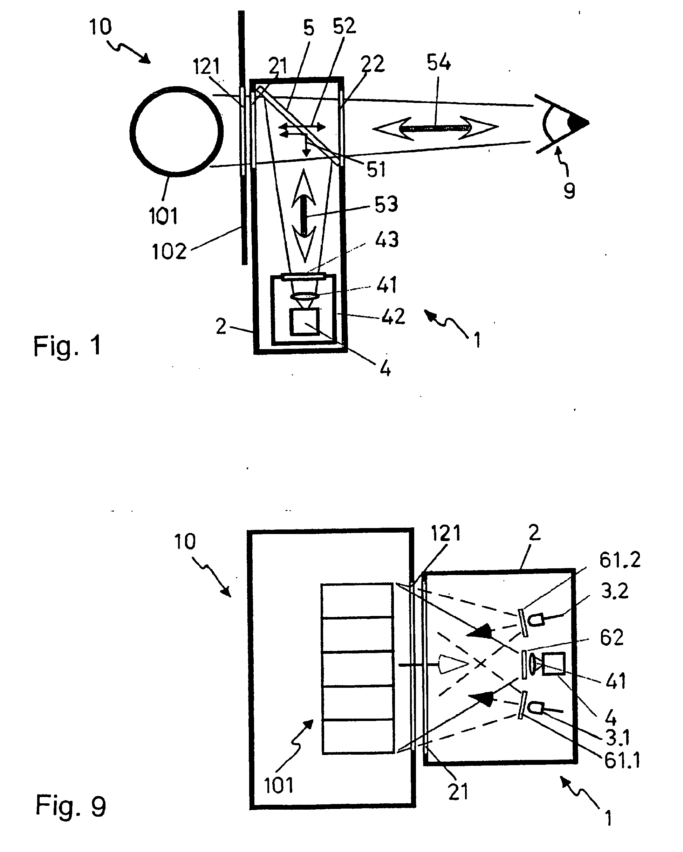

A first embodiment of the reading device 1 according to the invention is shown in **Figure 1.** The reading device 1 serves for automatically monitoring one or more meter roller(s) 101 arranged in a meter housing 102 of a counting mechanism 10, and for simultaneously allowing a human observer 9 to see and read the meter roller(s) 101. The meter housing 102 has a transparent meter window 121 for observing the meter roller(s) 101. The reading device 1 comprises a reading housing 2 with a first reading window 21 and a second reading window 22. The reading housing 2 can be mounted on the meter housing 102 in such a way that the the meter window 121 and the first reading window 21 coincide or overlap.

The embodiment shown in Fig. 1 uses two different wavelength bands 53, 54 for the automatic image-detection system and the human observer 9. It comprises a light source 3 for illumination of the meter roller(s) 101. For reasons of clarity, the light source 3 is not shown in Fig. 1, but may be arranged inside the reading housing in front of or behind an image detector, in analogy to Figure 9. The light source 3 emits light in a first, limited spectral band 53, typically in the infrared part of the electromagnetic spectrum, towards a dichroic semi-transparent mirror 5. The light source 3 may be, e.g., an LED, a laser diode or a thermal source with a bandpass filter.

An image detector 4, e.g., a solid-state image detector with a two-dimensional array of pixels, is arranged inside the reading housing 2. The image detector 4 serves for automatically reading the meter roller(s) 101. For this purpose, an imaging optical system 41, in the most simple case a lens, images the meter roller(s) 101 onto the detector plane. The image detector 4 converts the images into corresponding electric signals which may be read out via an output line (not shown). Suitable image detectors 4, output lines and devices for receiving, processing and interpreting output signals are known to persons skilled in the art.

The reading device 1 further comprises a dichroic semi-transparent mirror 5 for separating the first spectral band 53 from a second, different spectral band 54, typically in the visible part of the electromagnetic spectrum. The dichroic mirror 5 reflects the first spectral band 53 stronger than transmitting it, and transmits the second spectral band 54 stronger than reflecting it. The separation can be either partial, which is achievable, e.g., with a metal-coated (e.g., Au-coated) transparent plate 5, or complete, which is achievable, e.g., with a dielectric-coated plate 5. The dichroic mirror 5 is arranged inside the reading housing 2 in such a way that it reflects light emitted by the light source 3 towards the meter roller(s) 101, and that it reflects light scattered by the meter roller(s) 101 towards the image detector 4.

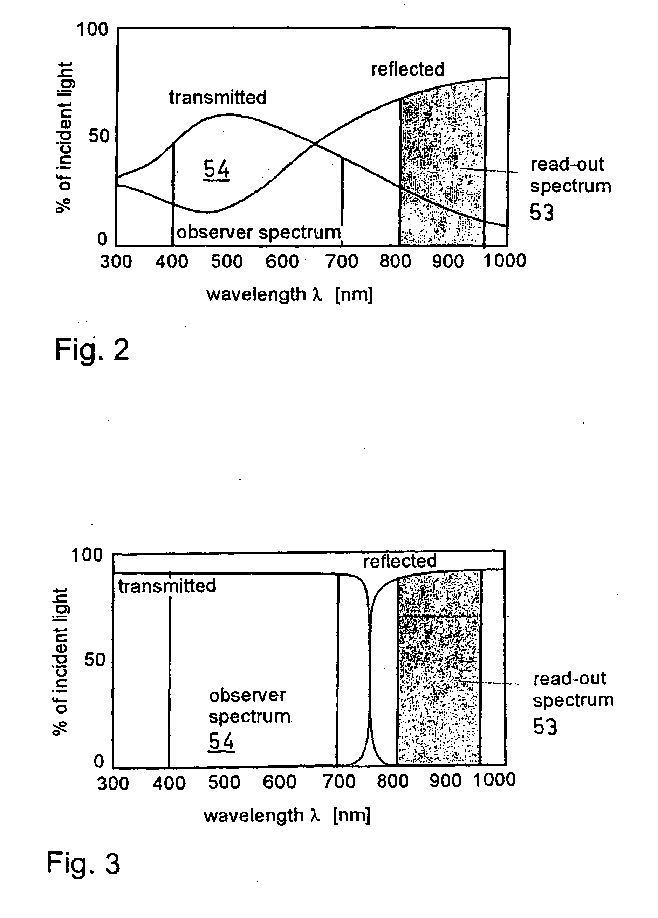

**Figure 2** shows the tansmission and reflection of a partly dichroic semitransparent mirror 5, and **Figure 3** the transmission and reflection of a dichroic mirror with complete separation, versus the light wavelength λ. The first spectral band 53 lies, e.g., between 800 and 950 nm and is used for the automatic reading by the image detector 4, whereas the second spectral band 54 lies, e.g., between 400 and 700 nm and is used for the visual reading by the observer 9. On the one hand, the dichroic mirror 5 transmits more light in the visible than the infrared leading to a brighter image for the observer 9. On the other hand, the dichroic mirror 5 reflects more light in the infrared than the visible, resulting in a better signal-to-noise ratio for the automatic reading system.

The image detector 4, and possibly the lens 41, is placed in a shielding box 42 impenetrable for any light. Light within the first spectral band 53 can pass into and out of the shielding box 42 through a box window 43 which comprises, or is preferably designed as, a spectral (or color) filter. The filter 43 serves for shielding the image detector 4 from undesired reflected or scattered light from the second spectral band 54 that could disturb the automatic meter reading. The filter 43 can be placed in front of or behind the imaging lens 41. The filter 43 can also be included in the lens 41 itself by coloring the lens 41 accordingly. The image detector 4 can only receive light which passed through the filter 43.

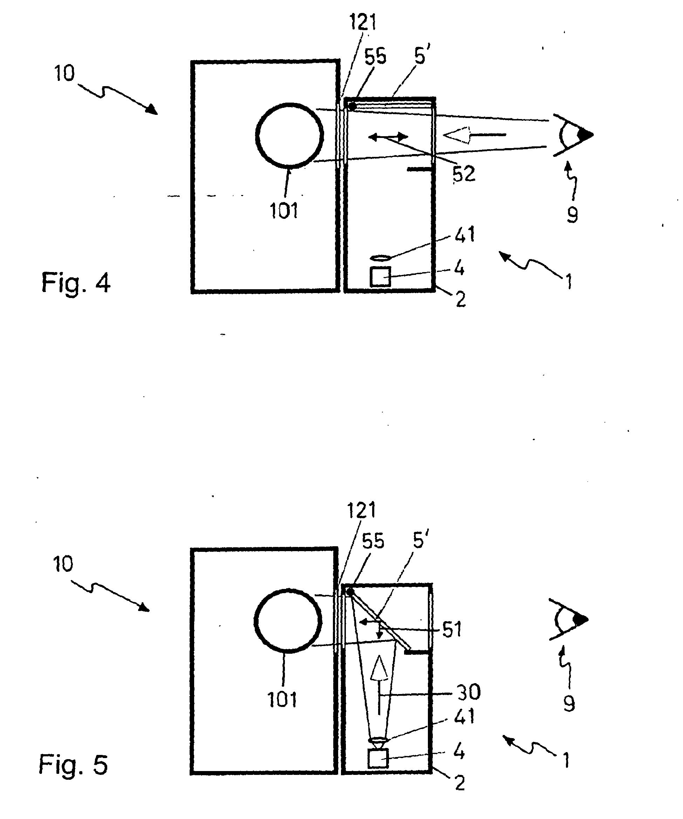

A second embodiment of the reading device 1 according to the invention uses a fold-away mirror 5' which allows to switch between the light path 51 for automatic reading and the light path 52 for visual reading. An example of this second embodiment is shown in **Figures 4 and 5.** Elements corresponding to those of Fig. 1 are designated by the same reference signs, and some elements (such as the shielding box 42) are omitted for the sake of clarity.

The fold-away mirror 5' can be pivoted between two different positions. **Figure 4** shows the reading device 1 in a first state in which the folding mirror 5' is in a horizontal position and thus allowing the observer to see the meter roller(s) 101. **Figure 5** shows the reading device 1 in a second state in which the folding mirror 5' is in a 45° position, thus allowing the meter roller(s) 101 to be imaged on the image detector 4 for automatic reading.

The fold-away mirror 5' is pivotably hinged on an axis 55. It may be optionally latched in one and/or the other position. It can be pivoted manually by the human observer 9 or by an automatic actuation system (not shown).

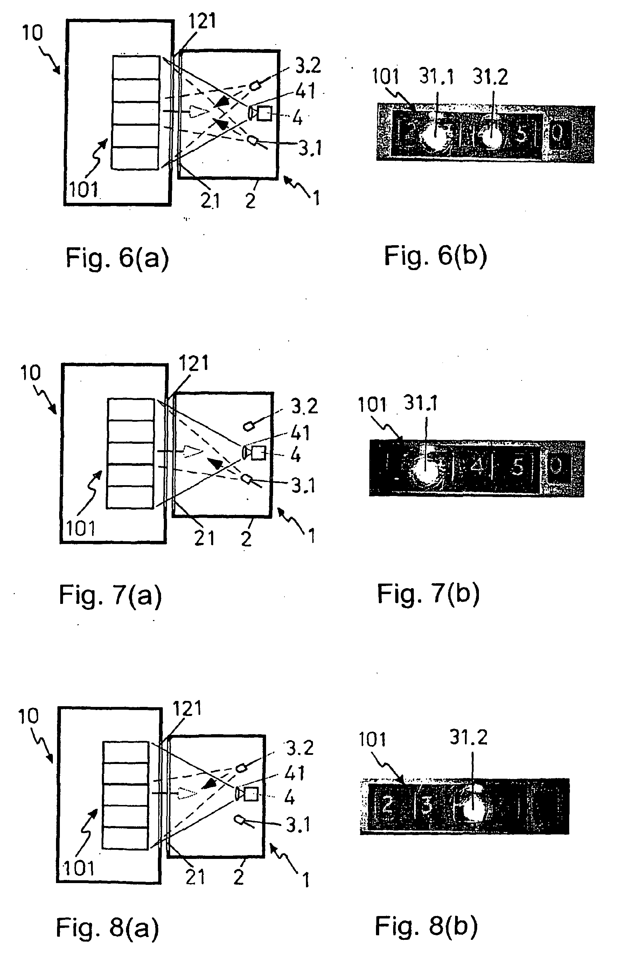

A third embodiment of the reading device 1 according to the invention allows to take two consecutive images to avoid the specular back-reflection from the window(s) 21, 121. It is described with reference to **Figures 6-8.** These figures show, for three different states of the reading device 1: (a) top views of the reading device 1 and (b) images taken by the image detector 4. The exemplified embodiment of Figs. 6-8 has two LEDs, i.e., a left LED 3.1 and a right LED 3.2, as light sources, but the reading device 1 could also have more LEDs or different types of light sources.

In the state shown in **Figure 6,** both LEDs 3.1, 3.2 are switched on. The specular back-reflections 31.1, 31.2 from the meter window 121 and the reading window 21 are superimposed on the image of the meter rollers 101 and make an automatic reading impossible (Fig. 6(b)). According to the invention, this unsatisfactory situation is avoided in the following way.

First, as shown in **Figure 7,** the left LED 3.1 is switched on and illuminates the right area of the meter rollers 101. The specular reflection 31.1 shows up in the left part of the image leaving the right part undisturbed for detection (Fig. 7(b)). Second, as shown in **Figure 8,** the right LED 3.2 is switched on and illuminates the left area of the meter rollers 101. The specular reflection 31.2 appears now in the right part of the image, leaving the left part undisturbed for detection (Fig. 8(b)). The two undisturbed half-images (Figs. 7(b) and 8(b)) have to be analyzed separately or can be combined to a single image for further processing. Instead of using first the left LED 3.1 and then the right LED 3.2, the sequence can, of course, also be first right and then left. Means for switching on and off the LEDs 3.1, 3.2 in a coordinated manner, for reading out parts of the images, for combining partial images etc. are known to a person skilled in the art and need not be described further here.

**Figure 9** shows a fourth embodiment of the device 1 according to the invention, which reduces the undesired specular back-reflections 31.1, 31.2 by means of two crossed polarizers 61.1, 61.2 and 62. The light 30 illuminating the meter rollers 101 is linearly polarized, e.g., by first polarizers 61.1, 61.2 placed behind the light sources 3.1, 3.2. A second polarizer (an analyzer) 62 with a polarization direction perpendicular to that of the first polarizers 61.1, 61.2 is used to discriminate between the specular back-reflection 31.1, 31.2 on the windows 21, 121 and the diffuse back-scattering on the meter rollers 101. The light reflected on the windows 21, 121 maintains its polarization state and is blocked by the "cross-polarized" analyzer 62 in front of the image detector 4. On the other hand, the light diffusively back-scattered from the meter rollers 101 is partly depolarized and can pass the analyzer 62 to a certain extent.

The image on the detector 4 is therefore undisturbed by any specular reflection 31.1, 31.2.

This invention is not limited to the preferred embodiments described above, to which variations and improvements may be made, without departing from the scope of protection of the present patent as defined in the claims. For instance, the inventive solutions for the discrimination of the specular reflections 31.1, 31.2 are sketched and described above (Figs. 6-9) for a device 1 directly attached to the meter window 121 and obscuring the meter rollers 101 for a human observer 9. The analogous approach can be taken for a layout with a semitransparent mirror 5 (cf. Fig. 1) with the illumination 30 reflected over this mirror 5. In particular, various embodiments of the invention may be combined with each other. Such a combination may yield an even better improvement than a single embodiment of the invention as described above.

### LIST OF REFERENCE SIGNS

- 1: Reading device

- 2: Housing
- 21, 22: First and second reading window

- 3: Light source
- 30: Emitted light
- 31: Specular back-reflection

- 4: Image detector
- 40: Impinging light
- 41: Imaging lens
- 42: Shielding box
- 43: Box window, color filter

- 5: Dichroic mirror
- 5': Fold-away mirror
- 51, 52: First and second light path
- 53, 54: First and second spectral band
- 55: Pivot axis

- 61: Polarizer
- 62: Analyzer

- 9: Observer

- 10: Counting device
- 101: Meter roller
- 102: Meter housing
- 121: Meter window

## Claims

1. A device (1) for automatically monitoring a metering device (101) arranged behind a window (21, 121), comprising
an image detector (4) for detecting an image of said metering device (101),
a first light source (3.1; 3.2) for illuminating said metering device (101),
**characterized in that**
the device further comprises at least a second light sources (3.2; 3.1) for illuminating said metering device (101), said first and second light sources (3.1, 3.2) being locally separated from each other,
and anti-reflection means comprising means for separately switching on and off each of said light sources (3.1, 3.2), so that said anti-reflection means are adapted to prevent a direct reflection (31) of illuminating light (30) from said window (21, 121) reaching said image detector (4).

2. The device (1) according to claim 1, wherein two of said light sources (3.1, 3.2) are placed on either side of said image detector (4).

3. A device (1) for automatically monitoring a metering device (101) arranged behind a window (21, 121), comprising
an image detector (4) for detecting an image of said metering device (101),
a light source (3.1, 3.2) for illuminating said metering device (101),
**characterized in that**
the device further comprises anti-reflection means comprising
polarizing means (61.1, 61.2) for linearly polarizing light (30) emitted by said light source (3) in a first polarization direction and
analyzing means (62) for linearly polarizing light (40) impinging onto said image detector (4) in a second polarization direction which is essentially perpendicular to said first polarization direction,
so that said anti-reflection means (61, 62) are adapted to prevent a direct reflection (31) of illuminating light (30) from said window (21, 121) reaching said image detector (4).

4. The device (1) according to one of the preceding claims, further comprising:
a housing (2),
a first window (21) and a second window (22) in said housing (2),
a first light path (51) within said housing (2) for automatically monitoring said metering device (101), said first light path (51) connecting said first window (21) with said image detector (4),
a second light path (52) within said housing (2) for visually monitoring said metering device (101), said second light path (52) connecting said first window (21) with said second window (22), and
a light source (3) for illuminating said metering device (101) via said first window (21), said light source (3) emitting light (30) in the infrared part of the electromagnetic spectrum.

5. The device (1) according to claim 4, wherein it further comprises optical wavelength-selective means (5, 43), arranged in said first (51) and/or second (52) light path,
which wavelength-selective means allow a first part (53) of the electromagnetic spectrum which comprises at least one wavelength emitted by said light source (3) to reach said image detector (4), and prevent a second, different part (54) of the electromagnetic spectrum from reaching said image detector (4).

6. The device (1) according to claim 5, wherein said wavelength-selective means comprise a dichroic, semi-transparent mirror (5) for separating said first light path (51) from said second light path (52).

7. The device (1) according to claim 5 or 6, wherein said wavelength-selective means comprise a wavelength-selective filter (43), which is preferably arranged in said first light path (51).

8. The device (1) according to any of claims 5-7, wherein said wavelength-selective means (5, 43) are designed such that said first part (53) of the electromagnetic spectrum comprises a spectral band within the near-infrared part of the electromagnetic spectrum, e.g., between 800 and 950 nm, and said second part (54) of the electromagnetic spectrum comprises a spectral band within the visible part of the electromagnetic spectrum, e.g., between 400 and 700 nm.

9. The device (1) according to claim 8, wherein said light source (3) is designed to emit light in the near-infrared part of the electromagnetic spectrum, e.g., between 800 and 950 nm.

10. The device (1) according to claim 4, wherein it further comprises a mirror (5') movable between a first and a second position,
which mirror (5') in said first position releases said first light path (51) and disables or blocks said second light path (52), and
which mirror (5') in said second position releases said second light path (52) and disables or blocks said first light path (51).

11. The device (1) according to claim 10, wherein said mirror (5') is a fold-away mirror pivotably hinged on an axis (55), and preferably said first and second position differ by a rotation of approximately 45° about said axis (55).

12. The device (1) according to claim 10 or 11, wherein said mirror (5') is latchable in said first and/or said second position.

13. The device (1) according to any of the claims 10-12, further comprising an automatic actuation system for automatically moving said mirror (5') from said first to said position and vice versa.

14. A method for automatically monitoring a metering device (101), wherein said metering device (101) is imaged on an image detector (4) and detected by said image detector (4),
**characterized in that**
said metering device (101) is consecutively illuminated from at least two different directions,
during each of said at least two illuminations, said metering device (101) is imaged on an image detector (4) and detected by said image detector (4), and
at least two resulting image signals are used for obtaining an image of said metering device (101) not disturbed by direct reflection of illuminating light (30).

15. The method according to claim 14, wherein
at least two light sources (3.1, 3.2) are provided for illuminating said metering device (101), said light sources (3.1, 3.2) being locally separated from each other,
a first light source (3.1) of said at least two light sources is switched on while a second light source (3.2) of said at least two light sources is switched off, and thereafter,
said first light source (3.1) is switched off while said second light source (3.2) is switched on.

16. A method for automatically monitoring a metering device (101), wherein said metering device (101) is imaged on an image detector (4) and detected by said image detector (4),
**characterized in that**
said metering device (101) is illuminated by light (30) linearly polarized in a first polarization direction, and only light (40) linearly polarized in a second polarization direction which is essentially perpendicular to said first polarization direction is allowed to impinge on said image detector (4) in order to obtain an image of said metering device not disturbed by direct reflection of illuminating light.

17. The method according to any one of claims 14 to 16, wherein
said metering device (101) is actively illuminated by light (30) with a certain spectral characteristic,
a first light path (51) is provided for automatically monitoring said metering device (101) with said image detector (4),and
a second light path (52) is provided for visually monitoring said metering device (101).

18. The method according to claim 17, wherein
a first part (53) of the electromagnetic spectrum which comprises at least one wavelength comprised in said illuminating light (30) is allowed to reach said image detector (4), and
a second, different part (54) of the electromagnetic spectrum is prevented from reaching said image detector (4).

19. The method according to claim 18 , wherein said first part (53) of the electromagnetic spectrum comprises a spectral band within the near-infrared part of the elctromagnetic spectrum, e.g., between 800 and 950 nm, and said second part (54) of the electromagnetic spectrum comprises a spectral band within the visible part of the electromagnetic spectrum, e.g., between 400 and 700 nm.

20. The method according to claim 17, wherein
said first light path (51) is released while said second light path (52) is blocked, and
said second light path (52) is released while said first light path (51) is blocked.

## Patentansprüche

1. Vorrichtung (1) zur automatischen Überwachung eines Messgerätes (101), das hinter einem Fenster (21, 121) angeordnet ist, umfassend
einen Bilddetektor (4) zum Detektieren eines Bildes des Messgerätes (101), und
eine erste Lichtquelle (3.1; 3.2) zum Beleuchten des Messgerätes (101),
**dadurch gekennzeichnet, dass**
die Vorrichtung ferner mindestens eine zweite Lichtquelle (3.2; 3.1) zum Beleuchten des Messgerätes (101) umfasst, wobei die genannten erste und zweite Lichtquellen (3.1, 3.2) örtlich voneinander getrennt sind,
und Antireflektionsmittel, das Mittel zum getrennten Ein- und Ausschalten jeder der Lichtquellen (3.1, 3.2) umfasst, so dass die Antireflektionsmittel dafür angepasst sind, eine direkte Reflektion (31) von Beleuchtungslicht (30) von dem Fenster (21, 121), welches den Bilddetektor (4) erreicht, zu verhüten.

2. Vorrichtung (1) nach Anspruch 1, wobei zwei der Lichtquellen (3.1, 3.2) auf jeder Seite des Bilddetektors (4) angeordnet sind.

3. Vorrichtung (1) zur automatischen Überwachung eines Messgerätes (101), das hinter einem Fenster (21, 121) angeordnet ist, umfassend
einen Bilddetektor (4) zum Detektieren eines Bildes des Messgerätes (101), und
eine erste Lichtquelle (3.1; 3.2) zum Beleuchten des Messgerätes (101),
**dadurch gekennzeichnet, dass**
die Vorrichtung ferner Antireflektionsmittel umfasst, umfassend
Polarisierungsmittel (61.1, 61.2) zum linearen Polarisieren von Licht (30), das von der Lichtquelle (3) emittiert ist, in einer ersten Polarisationsrichtung, und Analysierungsmittel (62) für linear polarisiertes Licht (40), das auf den Bilddetektor (4) in einer zweien Polarisationsrichtung fällt, die im wesentlichen senkrecht zur ersten Polarisationsrichtung ist,
so dass die Antireflektionsmittel (61, 62) dafür angepasst sind, eine direkte Reflektion (31) von Beleuchtungslicht (30) von dem Fenster (21, 121), welches den Bilddetektor (4) erreicht, zu verhüten.

4. Vorrichtung (1) nach einem der vorhergehenden Ansprüche, ferner umfassend:
ein Gehäuse (2),
ein erstes Fenster (21) und ein zweites Fenster (22) im genannten Gehäuse (2),
einen ersten Strahlengang (51) im Gehäuse (2) zur automatischen Überwachung des Messgerätes (101), wobei der erste Strahlengang (51) das erste Fenster (21) mit dem Bilddetektor (4) verbindet,
einen zweiten Strahlengang (52) im Gehäuse (2) zur visuellen Überwachung des Messgerätes (101), wobei der zweite Strahlengang (52) das erste Fenster (21) mit dem zweiten Fenster (22) verbindet, und
eine Lichtquelle (3) zum Beleuchten des Messgerätes (101) über das erste Fenster (21), wobei die Lichtquelle (3) Licht (30) im infraroten Teil des elektromagnetischen Spektrums emittiert.

5. Vorrichtung (1) nach Anspruch 4, wobei sie ferner optische wellenlängenselektive Mittel (5, 43) umfasst, die im ersten (51) und/oder zweiten (52) Strahlengang angeordnet sind,
wobei die optischen wellenlängenselektiven Mittel einem ersten Teil (53) des elektromagnetischen Spektrums, der mindestens eine Wellenlänge umfasst, die von der Lichtquelle (3) emittiert wird, ermöglicht, den Bilddetektor (4) zu erreichen, und einen zweiten, anderen Teil (54) des elektromagnetischen Spektrums daran hindert, den Bilddetektor (4) zu erreichen.

6. Vorrichtung (1) nach Anspruch 5, wobei das wellenlängenselektive Mittel einen dichroitischen, halbdurchlässigen Spiegel (5) zum Trennen des ersten Strahlengangs (51) vom zweiten Strahlengang (52) umfasst.

7. Vorrichtung (1) nach Anspruch 5 oder 6, wobei das wellenlängenselektive Mittel ein wellenlängenselektives Filter (43) umfasst, das vorzugsweise im ersten Strahlengang (51) angeordnet ist.

8. Vorrichtung (1) nach irgendeinem der Ansprüche 5-7, wobei das wellenlängenselektive Mittel (5, 43) derart ausgelegt ist, daß der erste Teil (53) des elektromagnetischen Spektrums einen Spektralbereich innerhalb des Teils des nahen Infrarots des elektromagnetischen Spektrums umfasst, z.B. zwischen 800 und 950 nm, und der zweite Teil (54) des elektromagnetischen Spektrums einen Spektralbereich innerhalb des sichtbaren Teils des elektromagnetischen Spektrums umfasst, z.B. zwischen 400 und 700 nm.

9. Vorrichtung (1) nach Anspruch 8, wobei die Lichtquelle (3) dafür ausgelegt ist, Licht im nahen Infrarotbereich des elektromagnetischen Spektrums zu emittieren, z.B. zwischen 800 und 950 nm.

10. Vorrichtung (1) nach Anspruch 4, wobei sie ferner einen Spiegel (5') umfasst, der zwischen einer ersten und einer zweiten Position beweglich ist,
wobei der Spiegel (5') in der ersten Position den ersten Strahlengang (51) freigibt und den zweiten Strahlengang (52) sperrt oder blockiert, und
wobei der Spiegel (5') in der zweiten Position den zweiten Strahlengang (52) freigibt und den ersten Strahlengang (51) sperrt oder blockiert.

11. Vorrichtung (1) nach Anspruch 10, wobei der Spiegel (5') ein wegklappbarer Spiegel ist, der drehbar auf einer Achse (55) aufgehängt ist, und die erste und zweite Position sich vorzugsweise durch eine Drehung von ca. 45° um die genannte Achse (55) unterscheiden.

12. Vorrichtung (1) nach Anspruch 10 oder 11, wobei der Spiegel (5') in der ersten und/oder zweiten Position verriegelbar ist.

13. Vorrichtung (1) nach irgendeinem der Ansprüche 10-12, die ferner ein automatisches Betätigungssystem zum automatischen Bewegen des Spiegels (5') von der ersten zur zweiten Position und umgekehrt umfasst.

14. Verfahren zum automatischen Überwachen eines Messgerätes (101), wobei das Messgerät (101) auf einen Bilddetektor (4) abgebildet und vom Bilddetektor (4) detektiert wird,
**dadurch gekennzeichnet, dass**
das Messgerät (101) nacheinander aus mindestens zwei unterschiedlichen Richtungen beleuchtet wird,
wobei bei während jeder der mindestens zwei Beleuchtungen das Messgerät (101) auf einem Bilddetektor (4) abgebildet und vom Bilddetektor (4) detektiert wird, und
mindestens zwei resultierende Bildsignale verwendet werden, um ein Bild des Messgeräts (101) zu erhalten, das nicht durch direkte Reflektion von Beleuchtungslicht (30) gestört ist.

15. Verfahren nach Anspruch 14, wobei
mindestens zwei Lichtquellen (3.1, 3.2) zum Beleuchten des Messgeräts (101) bereitgestellt sind, wobei die Lichtquellen (3.1, 3.2) örtlich voneinander getrennt sind,
eine erste Lichtquelle (3.1) der genannten mindestens zwei Lichtquellen eingeschaltet ist, während eine zweite Lichtquelle (3.2) der mindestens zwei Lichtquellen ausgeschaltet ist, und danach
die erste Lichtquelle (3.1) ausgeschaltet ist, während die zweite Lichtquelle (3.2) eingeschaltet ist.

16. Verfahren zum automatischen Überwachen eines Messgeräts (101), wobei das Messgerät (101) auf einen Bilddetektor (4) abgebildet und vom Bilddetektor (4) detektiert wird,
**dadurch gekennzeichnet, dass**
das Messgerät (101) von Licht (30) beleuchtet wird, das in einer ersten Polarisationsrichtung polarisiert ist und nur Licht (40), das in einer zweiten Polarisationsrichtung linear polarisiert ist, die im wesentlichen rechtwinklig zur ersten Polarisationsrichtung ist, auf den Bilddetektor (4) fallen kann, um ein Bild des Messgeräts zu erhalten, das durch direkte Reflektion von Beleuchtungslicht nicht gestört ist.

17. Verfahren nach irgendeinem der Ansprüche 14 bis 16, wobei
das Messgerät (101) durch Licht (30) mit einer bestimmten Spektralcharakteristik aktiv beleuchtet wird,
ein erster Strahlengang (51) zum automatischen Überwachen des Messgeräts (101) mit dem Bilddetektor (4) bereitgestellt wird, und
ein zweiter Strahlengang (52) zum optischen Überwachen des Messgeräts (101) bereitgestellt wird.

18. Verfahren nach Anspruch 17, wobei ein erster Teil (53) des elektromagnetischen Spektrums, der mindestens eine Wellenlänge umfasst, die im Beleuchtungslicht (30) enthalten ist, den Bilddetektor (4) erreichen kann, und
ein zweiter, anderer Teil (54) des elektromagnetischen Spektrums daran gehindert wird, den Bilddetektor (4) zu erreichen.

19. Verfahren nach Anspruch 18, wobei der erste Teil (53) des elektromagnetischen Spektrums einen Spektralbereich innerhalb des Teils des nahen Infrarots des elektromagnetischen Spektrums umfasst, z.B. zwischen 800 und 950 nm, und der zweite Teil (54) des elektromagnetischen Spektrums einen Spektralbereich innerhalb des sichtbaren Teils des elektromagnetischen Spektrums umfasst, z.B. zwischen 400 und 700 nm.

20. Verfahren nach Anspruch 17, wobei
der erste Strahlengang (51) freigegeben ist, während der zweite Strahlengang (52) blockiert ist, und
der zweite Strahlengang (52) freigegeben ist, während der erste Strahlengang (51) blockiert ist.

## Revendications

1. Dispositif (1) pour automatiquement surveiller un dispositif de mesure (101) agencé derrière une fenêtre (21 ; 121), comprenant :
un détecteur d'image (4) pour détecter une image dudit dispositif de mesure (101),
une première source de lumière (3.1 ; 3.2) pour illuminer ledit dispositif de mesure (101),
**caractérisé en ce que**
le dispositif comprend en outre au moins une deuxième source de lumière (3.2 ; 3.1) pour illuminer ledit dispositif de mesure (101), lesdites première et deuxième sources de lumière (3.1 ; 3.2) étant localement séparées l'une de l'autre,
et des moyens antiréflectifs comprenant des moyens pour mettre en marche et hors marche séparément chacune desdites sources de lumière (3.1 ; 3.2), de manière à ce que lesdits moyens antiréflectifs soient adaptés pour empêcher qu'un réfléchissement direct (31) de la lumière d'illumination (30) de ladite fenêtre (21; 121) n'atteigne ledit détecteur d'image (4).

2. Dispositif (1) selon la revendication 1, dans lequel deux desdites sources de lumière (3.1 ; 3.2) sont placées d'un côté dudit détecteur d'image (4).

3. Dispositif (1) pour surveiller automatiquement un dispositif de mesure (101) agencé derrière une fenêtre (21 ; 121), comprenant :
un détecteur d'image (4) pour détecter une image dudit dispositif de mesure (101),
une source de lumière (3.1 ; 3.2) pour illuminer ledit dispositif de mesure (101) ;
**caractérisé en ce que**
le dispositif comprend en outre des moyens antiréflectifs comprenant :
des moyens de polarisation (61.1 ; 61.2) pour polariser linéairement la lumière (30) émise par ladite source de lumière (3) dans une première direction de polarisation et
des moyens d'analyse (62) pour polariser linéairement la lumière (40) empiétant sur ledit détecteur d'image (4) dans une deuxième direction de polarisation qui est essentiellement perpendiculaire à ladite première direction de polarisation,
de manière à ce que lesdits moyens antiréflectifs (61 ; 62) soient adaptés pour empêcher qu'un réfléchissement direct (31) de la lumière d'illumination (30) de ladite fenêtre (21 ; 121) n'atteigne ledit détecteur d'image (4).

4. Dispositif (1) selon l'une quelconque des revendications précédentes, comprenant en outre :
un boîtier (2),
une première fenêtre (21) et une deuxième fenêtre (22) dans ledit boîtier (2),
un premier chemin de lumière (51) à l'intérieur dudit boîtier (2) pour surveiller automatiquement ledit dispositif de mesure (101), ledit chemin de lumière (51) connectant ladite première fenêtre (21) au dit détecteur d'image (4),
un deuxième chemin de lumière (52) à l'intérieur dudit boîtier (2) pour surveiller visuellement ledit dispositif de mesure (101), ledit deuxième chemin de lumière (52) connectant ladite première fenêtre (21) à ladite deuxième fenêtre (22), et
une source de lumière (3) pour illuminer ledit dispositif de mesure (101) par l'intermédiaire de ladite première fenêtre (21), ladite source de lumière (3) émettant de la lumière (30) dans la partie infrarouge du spectre électromagnétique.

5. Dispositif (1) selon la revendication 4, comprenant en outre des moyens de sélection de longueur d'onde optique (5 ; 43), agencés dans ledit premier chemin de lumière (51) et/ou dans ledit deuxième chemin de lumière (52) ;
lesdits moyens de sélection de longueur d'onde permettant à une première partie (53) du spectre électromagnétique qui comprend au moins une longueur d'onde émise par ladite source de lumière (3) d'atteindre ledit détecteur d'image (4) et empêchant qu'une deuxième partie différente (54) du spectre électromagnétique n'atteigne ledit détecteur d'image (4).

6. Dispositif (1) selon la revendication 5, dans lequel lesdits moyens de sélection de longueur d'onde comprennent un miroir dichroïque semi-transparent (5) pour séparer ledit premier chemin de lumière (51) dudit deuxième chemin de lumière (52).

7. Dispositif (1) selon la revendication 5 ou 6, dans lequel lesdits moyens de sélection de longueur d'onde comprennent un filtre de sélection de longueur d'onde (43), qui est de préférence agencé dans ledit premier chemin de lumière (51).

8. Dispositif (1) selon l'une quelconque des revendications 5 à 7, dans lequel lesdits moyens de sélection de longueur d'onde (5 ; 43) sont conçus de manière à ce que ladite première partie (53) du spectre électromagnétique comprenne une bande spectrale à l'intérieur de la partie proche des infrarouges du spectre électromagnétique, par exemple entre 800 et 950 nm, et ladite deuxième partie (54) du spectre électromagnétique comprenne une bande spectrale à l'intérieur de la partie visible du spectre électromagnétique, par exemple entre 400 et 700 nm.

9. Dispositif (1) selon la revendication 8, dans lequel ladite source de lumière (3) est conçue pour émettre de la lumière dans la partie proche des infrarouges du spectre électromagnétique, par exemple entre 800 et 950 nm

10. Dispositif (1) selon la revendication 4, comprenant en outre un miroir (5') mobile entre une première position et une deuxième position, ledit miroir (5') à ladite première position libérant ledit premier chemin de lumière (51) et désactivant ou bloquant ledit deuxième chemin de lumière (52), et
ledit miroir (5') à ladite deuxième position libérant ledit deuxième chemin de lumière (52) et désactivant ou bloquant ledit premier chemin de lumière (51).

11. Dispositif (1) selon la revendication 10, dans lequel ledit miroir (5') est un miroir pliable pivotant en charnière sur un axe (55), et de préférence ladite première position et ladite deuxième position diffèrent d'une rotation d'environ 45° autour dudit axe (55).

12. Dispositif (1) selon la revendication 10 ou 11, dans lequel ledit miroir (5') est verrouillable à ladite première position et/ou à ladite deuxième position.

13. Dispositif (1) selon l'une quelconque des revendications 10 à 12, comprenant en outre un système d'actionnement automatique pour déplacer automatiquement ledit miroir (5') de ladite première position à ladite deuxième position et vice versa.

14. Procédé pour surveiller automatiquement un dispositif de mesure (101), dans lequel ledit dispositif de mesure (101) est imagé sur un détecteur d'image (4) et détecté par ledit détecteur d'image (4),
**caractérisé en ce que**
ledit dispositif de mesure (101) est consécutivement illuminé d'au moins deux directions différentes,
au cours de chacune desdites au moins deux illuminations, ledit dispositif de mesure (101) est imagé sur un détecteur d'image (4) et détecté par ledit détecteur d'image (4), et
au moins deux signaux d'image résultants sont utilisés pour obtenir une image dudit dispositif de mesure (101) non perturbée par le réfléchissement direct de la lumière d'illumination (30).

15. Procédé selon la revendication 14, dans lequel
au moins deux sources de lumière (3.1 ; 3.2) sont fournies pour illuminer ledit dispositif de mesure (101), lesdites sources de lumière (3.1 ; 3.2) étant localement séparées l'une de l'autre,
une première source de lumière (3.1) desdites au moins deux sources de lumière est mise en marche alors qu'une deuxième source de lumière (3.2) desdites au moins deux sources de lumière est mise hors marche, puis
ladite première source de lumière (3.1) est mise hors marche alors que ladite deuxième source de lumière (3.2) est mise en marche.

16. Procédé pour surveiller automatiquement un dispositif de mesure (101), dans lequel ledit dispositif de mesure (101) est imagé sur un détecteur d'image (4) et détecté par ledit détecteur d'image (4),
**caractérisé en ce que**
ledit dispositif de mesure (101) est illuminé par la lumière (30) linéairement polarisée dans une première direction de polarisation, et uniquement la lumière (40) linéairement polarisée dans une deuxième direction de polarisation qui est essentiellement perpendiculaire à ladite première direction de polarisation est autorisée à empiéter sur ledit détecteur d'image (4) pour obtenir une image dudit dispositif de mesure non perturbée par le réfléchissement direct de la lumière d'illumination.

17. Procédé selon l'une quelconque des revendications 14 à 16, dans lequel
ledit dispositif de mesure (101) est activement illuminé par la lumière (30) avec une certaine caractéristique spectrale,
un premier chemin de lumière (51) est fourni pour surveiller automatiquement ledit dispositif de mesure (101) avec ledit détecteur d'image (4), et
un deuxième chemin de lumière (52) est fourni pour surveiller visuellement ledit dispositif de mesure (101).

18. Procédé selon la revendication 17, dans lequel
une première partie (53) du spectre électromagnétique qui comprend au moins une longueur d'onde comprise dans ladite lumière d'illumination (30) est autorisée à atteindre ledit détecteur d'image (4), et
une deuxième partie différente (54) du spectre électromagnétique est empêchée d'atteindre ledit détecteur d'image (4).

19. Procédé selon la revendication 18, dans lequel ladite première partie (53) du spectre électromagnétique comprend une bande spectrale à l'intérieur de la partie proche des infrarouges du spectre électromagnétique, par exemple entre 800 et 950 nm, et ladite deuxième partie (54) du spectre électromagnétique comprend une bande spectrale à l'intérieur de la partie visible du spectre électromagnétique, par exemple entre 400 et 700 nm.

20. Procédé selon la revendication 17, dans lequel
ledit premier chemin de lumière (51) est libéré alors que ledit deuxième chemin de lumière (52) est bloqué, et
ledit deuxième chemin de lumière (52) est libéré alors que ledit premier chemin de lumière (51) est bloqué.
